# EUROPEAN PATENT APPLICATION

(11) **EP 1 136 236 A1**
(43) Date of publication of application: **26.09.2001**
(21) Application number: 00500168.0
(22) Date of filing: 26.07.2000
(51) Int. Cl.: B29C 70/34, B29C 70/44

(54) **Process for manufacturing composite material primary structures with female tool curing**

(30) Priority: 07.03.2000 ES 200000550
(71) Applicant: CONSTRUCCIONES AERONAUTICAS, S.A., 28022 Madrid (ES)
(72) Inventor: Cerezo Pancorbo, Carlos, 28022 Madrid (ES); Dominguez Casado, Rafael, 28022 Madrid (ES); De Castro Nodal, Manuel, 28022 Madrid (ES); Perez Pastor, Augusto, 28022 Madrid (ES); Gracia Gracia, Aquilino, 28022 Madrid (ES); Huertas Gracia, Manuel, 28022 Madrid (ES)
(74) Representative: Elzaburu, Alberto de

(57) **Abstract**

A process for manufacturing primary structures of composite material with female tool curing, comprising the lamination of superimposed composite material layers in a pre-impregnated state; placing the obtained laminate over a forming tool, loading the assembly in a vacuum bell and applying a pre-established forming cycle; loading the already formed, but still in a green state, laminate in a female tool (4) suitable for its curing, placing lateral beetles (5) and inserting elastomeric pipes (6) in channels of said beetles, fitting a central beetle (5), sealing the assembly and making a vacuum bag with perforations to remove the air from inside; and loading the assembly in an autoclave, then hermetically closing the autoclave and carrying out the corresponding curing cycle. The invention is applicable to the field of aeronautics.

## Description

### FIELD OF THE INVENTION

The present invention refers to a process for manufacturing primary structural elements with female tool curing, which assures the required dimensional tolerances of such components and the absence of porosity in the radii area, likewise preventing the flow of resin outwards. The manufactured structural components may have both transverse and longitudinal overthicknesses and reinforcements.

More specifically, the present invention intends to develop the necessary theoretical concepts and the related manufacturing processes, to carry out laminate, forming and curing of primary structures, such as front and rear aircraft spars, in a female tool with determined dimensional limitations.

The technology corresponding to female tool curing by means of using the relevant beetles is novel and has been totally developed by the applicant.

One of the most productive industrial applications of the invention is to manufacture big size parts, where the dimensional quality thereof is assured.

### BACKGROUND OF THE INVENTION

The technology corresponding to female tool curing by means of the support on the respective beetles, totally developed by the present invention, is entirely new and for the first time allows an aircraft spar or other primary structure to be manufactured following a process like that described in this specification, that is, automatic taping, thermoforming and female tool curing. The invention is the result of the research carried out regarding flying-surfaces like those called LFS (Large Flying-Surfaces) and in the FB 4.1 preliminary certification tests (torsion box with fuel pressure).

From the results of the previous experiments as well as from the related manufacturability studies and tests, it is deduced that the application of the process of the invention is feasible and reliable for its use in parts with highly demanded resistant structures with strict quality requirements.

### FIELD OF APPLICATION OF THE INVENTION

This invention is applicable to the manufacture of previously formed composite material parts.

These parts may be any of those belonging to:
- Aircraft structures and controls such as flying-surface coatings, spars, ribs, fixtures.
- Space vehicles.
- Marine and land vehicles.
- Industrial machinery and equipment.

The manufacturing processes involved to obtain these parts are:
- Laminating of composite material (manual or automatic).
- Cutting of composite material.
- Hot forming of composite material.
- Handling and positioning of stiffeners, parts and tools.
- Autoclave curing.

The materials used in the manufacture of these parts may be integrated by different resins and different fibre types, such as:
- Fiberglass.
- Carbon fibre
- Kevlar fibre
- Boron fibre
- Epoxy resin
- Thermoplastic resin
- Other heat-stable resins

### SUMMARY OF THE INVENTION

The object of the invention is a process for manufacturing structural parts of composite material in which the curing of the parts occurs inside a female tool. This is obtained by means of the suitable tooling permitting to control and to retain the resin flow produced during the curing cycle.

The cured part may be a wing spar, a stabiliser both horizontal and vertical or any carbon fibre component with a U-shaped transversal section.

The essence of the process of the present invention is to design of a female tool permitting a complete compaction of the radii without significant porosity and with a high dimensional accuracy. For this purpose, there are relevant beetles which will aid the attainment of the aforementioned objects.

The process of the invention is applicable to the parts obtained by any lamination process (manual, automatic) but the novelty introduced by the invention is that it permits to manufacture spars with automatic taping and hot forming, which prevents an expensive manual process for fitting the aeroplane linens, especially if in a tape form.

### BRIEF DESCRIPTION OF THE DRAWINGS

For a better understanding of the process of the invention, the attached drawings will be resorted to, where:
Figure 1 is a general perspective view of a spar manufactured according to the process of the invention,
Figure 2 illustrates the forming of the spar of figure 1 and
Figure 3 shows the curing of the spar of figures 1 and 2 in a female tool.

### DETAILED DESCRIPTION OF THE INVENTION

The manufacturing process developed by the invention to obtain structural parts of composite material involves a series of preliminary processes which permit to obtain an optimised curing.

Each one of them is described below:

### A - Laminating of the part or parts

This consists in the superposition of composite material layers in a pre-impregnated condition, so that the orientation of the fibre is adapted to the structural requirements of the part. The distribution of the layers should permit their lamination and forming without distortion of the fibre and also that the part, once cured, has no permanent deformations due to thermal stresses. During lamination, necessary reinforcements to improve resistance of the part will also be introduced.

The laminated parts may be submitted to a later cutting according to the convenience of laminating several parts at the same time. In this case, fan laminating will be carried out.

### B - Part Forming

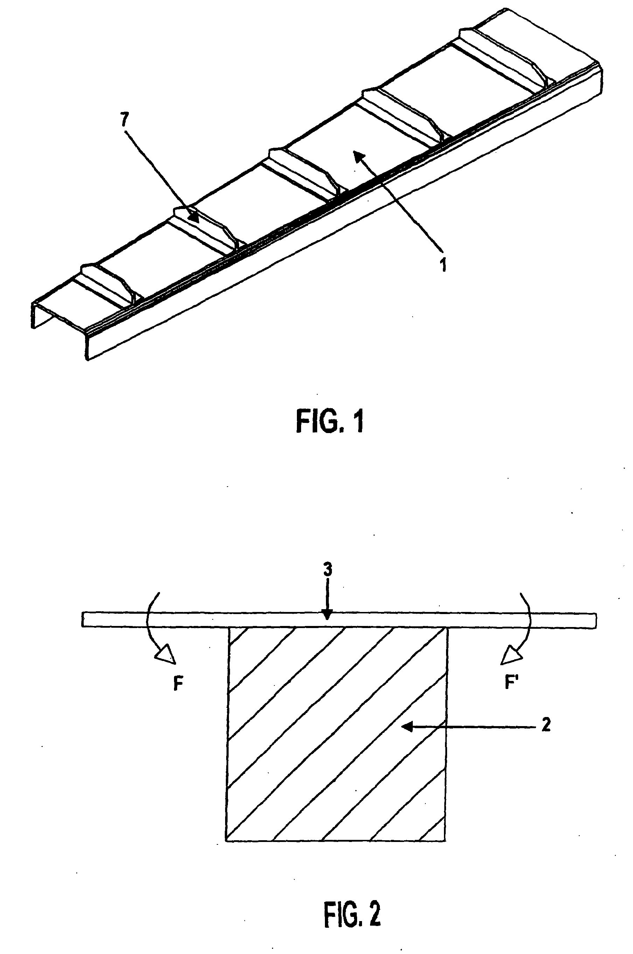

The part is placed and positioned, in this case a spar 1 (figure 1), over the forming tool 2 (figure 2) through the pre-established centerings, gripping the laminate 3 with the corresponding beetle.

The assembly is loaded into a vacuum bell and the predetermined forming cycle is applied at a temperature comprised between 55 and 65 ºC, producing the forming of the laminate 3 in the direction marked by the arrows F, F' of figure 2.

### C - Spar curing

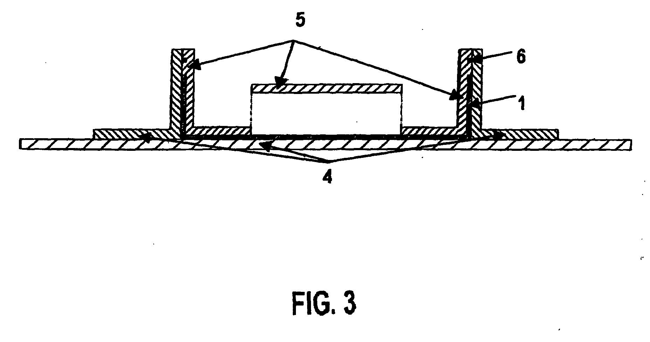

The already formed spar 1 is loaded, but in a green state, in the box female 4 designed for its curing, and the relevant tools are fitted to prevent the beetles 5 from marking the carbon fibre (figure 3).

Once the assembly is centred, the lateral beetles 5 of the interior are fitted and the elastomeric pipes 6 are installed in the relevant channels in the beetles 5. The assembly is closed and the relevant pins fitted.

The beetle 5 is placed sealing the assembly with strips between the grooves of the lateral and central beetles.

Finally, a vacuum bag is made with the suitable perforations to remove the air from its interior, hence assuring perfect tightness thereof.

### D - Autoclave curing

The assembly is loaded over the autoclave support tool. This is hermetically closed and the corresponding curing cycle is carried out rating the value of the following essential parameters:
- Pressure: 5.95 to 10.5 kg/cm².
- Temperature: up to 190ºC according to the material.
- Heating/cooling speed: 0.5 to 2ºC/min.

Once the autoclave chamber reaches the environmental conditions of pressure and temperature again, the already cured and perfectly consolidated material, that is, the spar 1, is removed.

### E - Stiffeners

Transverse and longitudinal stiffeners 7 (Fig. 1) may be added to the already cured spar 1. For this purpose, these stiffeners 7 are previously formed and cured, then being stuck to the spar 1 with different types of structural adhesives. The possibility of adding co-glued stiffeners 7 is also provided.

The aforementioned process of the invention is applicable to different spar 1 thicknesses, having reached until now, thicknesses from 2 to 20 mm and lengths of up to 17 m.

Until now, the essential features of the invention have been remarked, although, as will be understood, it would be possible to modify certain details of the described manufacturing process. For this reason, it is intended that the scope of the invention is only limited by the attached claims.

## Claims

1. A process for manufacturing primary structural components of composite material with female tool curing, assuring the dimensional tolerances required for such components and the absence of porosity in the radii area, likewise preventing resin of the composite material from flowing outwardly, the structural components being able to have both transverse and longitudinal overthicknesses and reinforcements, **characterised in that** it comprises the steps of:
a) laminating superimposed layers of composite material in a pre-impregnated condition, so that the orientation of the fibre is adapted to the requirements of the structural component or components to be produced, introducing one or more necessary reinforcements in the laminate (3) formed by said composite material layers, to improve the resistance of the structural components;
b) placing the laminate (3) obtained in step a) over a forming tool (2) and adjusting it by means of pre-established centerings, gripping the laminate (3) with a corresponding beetle, loading the assembly in a vacuum bell and applying a predetermined forming cycle;
c) loading the already formed, but still in a green state, laminate (3) in a female tool (4) suitable for its forming, and once the assembly is centred, placing lateral beetles (5) of the inside of the structural component or components to be manufactured and elastomeric pipes (6) in suitable channels in the lateral beetles, closing the assembly and fitting suitable pins, after which the central beetle (5) is fitted, sealing the assembly with strips between grooves of the central and lateral beetles and finally, making a vacuum bag with suitable perforations to remove the air from its interior, hence assuring the perfect tightness thereof; and
d) loading the assembly of step c) on an autoclave support tool, the latter being hermetically closed and carryng out the corresponding curing cycle, after which the autoclave chamber is allowed to reach the environmental conditions of pressure and temperature again and the already cured and perfectly consolidated structural component or components are removed from the autoclave.

2. A process according to claim 1, **characterised in that** if it is necessary to laminate several structural components at the same time, the laminate (3) obtained in step a) is cut afterwards into the several structural components required and in that, in this case, the lamination of the superimposed layers of composite material is made fanwise.

3. A process according to claim 1 or 2, **characterised in that** it also comprises the addition of both transverse and lateral stiffeners (7) to the already cured structural components, which stiffeners are previously formed and cured and then glued to the structural components with the aid of a structural adhesive.

4. A process according to claim 3, **characterised in that** co-glued stiffeners (7) are added to the obtained structural components.

5. A process according to any of the previous claims, **characterised in that** the laminate (3) forming temperature is selected within the range of 55 to 65ºC.

6. A process according to any of the previous claims, **characterised in that** the curing of the structural component or components obtained in the autoclave is carried out at a pressure from 5.95 to 10.5 kg/m² and at a temperature of up to 190ºC depending on the used composite material, with a heating/cooling rate from 0.5 to 2ºC/min.

7. A process according to any of the previous claims, **characterised in that** structural components applicable to aerospace, marine and land vehicle structures and controls are obtained, as well as in industrial machinery and equipment.

8. A process according to claim 7, **characterised in that** the structural component consists of an aircraft wing spar (1), a stabiliser both horizontal and vertical or other fibre component with a U-shaped transverse section.

9. A process according to claim 8, **characterised in that** the spar (1) has a thickness from 2 to 20 mm and a length of up to 17 m.

10. A process according to any of the previous claims, **characterised in that** the composite material consists of fibres and resins selected from fiberglass, carbon fibre, Kevlar fibre, boron fibre, epoxy resin, thermoplastic resin and other heat-stable resins.
